# EUROPEAN PATENT APPLICATION

(11) **EP 1 690 694 A1**
(43) Date of publication of application: **16.08.2006**
(21) Application number: 05003060.0
(22) Date of filing: 14.02.2005
(51) Int. Cl.: B41M 7/00, B41J 11/00, B41J 2/435, C09D 11/10

(54) **Exposure-curing method of photo-cure type ink and inkjet recording apparatus**

(71) Applicant: Toshiba TEC Kabushiki Kaisha, Tokyo 141-8664 (JP)
(72) Inventor: Ohtsu, Kazuhiko, Tokyo 141-8664 (JP); Ushirogouchi, Toru, Tokyo 141-8664 (JP); Akiyama, Ryozo, Tokyo 141-8664 (JP); Kiyomoto, Hiroshi, Tokyo 141-8664 (JP); Ishibashi, Mitsuru, Tokyo 141-8664 (JP); Hiroki, Masashi, Tokyo 141-8664 (JP); Kawakami, Yukiko, Tokyo 141-8664 (JP)
(74) Representative: Kramer - Barske - Schmidtchen

(57) **Abstract**

Disclosed is a method of exposure-curing an ink layer formed on a recording medium. The layer is made of an ink comprising at least one solvent polymerizable by an acid, a photo-acid generating agent capable of generating the acid as irradiated with light, and a colorant component. This method comprises two irradiation steps. In the first irradiation, the ink layer is irradiated with light by using a light source having a first peak illuminance. The acid is thereby generated from the photo-acid generating agent. The diffusion of the acid is promoted in the layer, curing the ink layer to some extent. In the second irradiation, the ink layer is irradiated with light by using a light source having a second peak illuminance higher than the first peak illuminance. More acid is generated from the photo-acid generating agent and diffuses in the layer, completely curing the ink layer.

## Description

This invention relates to an exposure-curing method of a photo-curing type ink which is curable by an acid to be generated as the ink is irradiated with light. This invention also relates to an inkjet recording apparatus.

In the printer system where a UV ink is employed, since an ink layer printed can be instantaneously non-fluidized by the irradiation of ultraviolet rays, it is possible to obtain a printed matter which is relatively high in quality. Ordinary UV inks however are accompanied with problems that, when a printing surface (i.e. a surface on which printing is performed) is formed of an absorptive medium, the ink absorbed in the interior of the absorptive paper cannot be readily cured and hence generates irritating odor of the ink.

With a view to promote the curing of the ink layer, there has been proposed an inkjet recording apparatus provided with a heating means. In this case, the ink to be employed therein is a photo-curable inkjet ink comprising a photo-acid generating agent which is capable of generating an acid as it is irradiated with light, a colorant component, and a solvent which is polymerizable in the presence of the acid. This inkjet ink is designed such that, as the ink is heated, the acid acting as a catalyst is enabled to diffuse into the interior of the ink layer to promote the polymerization or curing of the ink. Although it is possible, in this manner, to readily cure even the ink that has been penetrated deep into the absorptive paper, the employment of this ink necessitates the employment of a printing apparatus provided additionally with heating means.

Further, since the velocity of change in diameter of dots after the impingement of ink against the printing surface differs depending on the kinds of recording medium, if the irradiation of light is performed at the same timing irrespective of the kinds of the recording medium, the diameter of dots fluctuates after the curing thereof, thereby making the printed image non-uniform in quality. Therefore, there is also proposed an inkjet recording apparatus provided with a plurality of light sources which are selectively turned on in various manners depending on the kinds of the recording medium so as to make the diameter of dots uniform after the curing of the ink.

In the case of the photo-curing type ink which is curable by an acid to be generated from the ink when it is irradiated with light, it is impossible to realize a sufficient diffusion of the acid into a recording medium if only the irradiation of light is employed, resulting in curing failure of the ink, thus making it impossible to form satisfactory printed images on the recording medium. Therefore, the photo-curing type ink is generally subjected to heating after the irradiation of light so as to enable the acid requiring for the curing to sufficiently diffuse into a deep portion of the ink layer to cure the ink, thus making it possible to form satisfactory printed images on the recording medium. Therefore, the inkjet recording apparatus in this case is required to be provided with a heating means for heating both of the recording medium and the photo-curing type ink, thus necessitating the employment of a large scale apparatus. Further, the recording apparatus provided with the heating means cannot be easily modified.

There is also proposed to utilize the heat to be irradiated from the light-irradiating means for the curing of the ink layer. However, if the light-irradiating output is excessively increased, a surface portion of the ink layer cures in advance, thus preventing an inner portion of the ink layer from being sufficiently cured. As a result, there are possibilities of raising the problem of curing failure. Further, there is another problem in this case that when another recording medium is directly superimposed on a printed image immediately after finishing the exposure-curing process, part of the ink layer which is not yet sufficiently cured transfers to the rear surface of the underlying recording medium, thus generating a phenomenon of set-off.

Generally speaking, in the case of the printed matters which are printed by an inkjet recording apparatus, if the image density (OD value) thereof is 1.5 or more, the printed matters are considered as having sufficient density characteristics. In order to realize this, the quantity of pigment to be incorporated into the ink is required to be more or less sufficient. However, since the photo-curing type ink is cured by the irradiation of light, if the concentration of the pigment in the ink is increased, it would become difficult for the light to reach a deep portion of the ink layer, resulting in the deterioration in curability of the ink layer. Likewise, when the.thickness of the ink layer is increased, curability of the ink layer will also degrade.

Therefore, one of the objects of the present invention is to provide an exposure-curing method of a photo-curing type ink, which is capable of uniformly curing not only a surface region but also an inner region of an ink layer without inviting defective curing of the ink layer.

Further, another object of the present invention is to provide an inkjet recording apparatus which is capable of forming excellent printed images without necessitating the additional provision of heating means for promoting the curing of an ink layer composed of a photo-curing type ink.

According to one aspect of the present invention, there is provided a method of exposure-curing a ink layer formed on a recording medium, the ink layer being formed of a photo-curing type ink comprising at least one solvent which is polymerizable in the presence of an acid, a photo-acid generating agent which is capable of generating the acid as irradiated with light, and a colorant component, the method comprising:
a first light-irradiating step wherein the ink layer is irradiated, by using a light-irradiating means having a first peak illuminance, with light having a wavelength which can be absorbed by the photo-acid generating agent, thereby not only causing the acid to generate from the photo-acid generating agent included in the ink layer but also causing the ink layer to rise in temperature to decrease in viscosity of the ink, thus promoting the diffusion of the acid in the ink layer, with the proviso that the ink layer is cured incompletely by the first light-irradiating step; and
a second light-irradiating step wherein the ink layer which has been treated in the first light-irradiating step is irradiated with light by using a light-irradiating means having a second peak illuminance which is higher than the first peak illuminance, thereby not only causing the acid to further generate from the photo-acid generating agent in the ink layer but also causing the ink layer to rise in temperature to promote the diffusion of the acid inside the ink layer and further promote the curing of the ink layer.

According to another aspect of the present invention, there is provided an inkjet recording apparatus comprising:
an inkjet recording head;
means for shifting a recording medium and the inkjet recording head relative to each other;
means for forming an ink layer through delivery of a photo-curing type ink from the inkjet recording head onto the recording medium, the photo-curing type ink comprising at least one solvent which is polymerizable in the presence of an acid, a photo-acid generating agent which is capable of generating the acid as irradiated with light, and a colorant component;
a first light-irradiating means for irradiating light having a wavelength which can be absorbed by the photo-acid generating agent onto the ink layer at a first illuminance, thereby not only causing the acid to generate from the photo-acid generating agent included in the ink layer but also causing the ink layer to rise in temperature to decrease in viscosity of the ink, thus promoting the diffusion of the acid in the ink layer without curing the ink layer to completely;
a second light-irradiating means for irradiating light at a second peak illuminance which is higher than the first peak illuminance for promoting the curing of the ink layer after a first irradiation by using the first light-irradiating means; and
a light irradiation-controlling means for controlling the first peak illuminance of the first light-irradiating means so as to make it lower than the second peak illuminance of the second light-irradiating means.

This summary of the invention does not necessarily describe all necessary features so that the invention may also be a sub-combination of these described features:
The invention can be more fully understood from the following detailed description when taken in conjunction with the accompanying drawings, in which:
FIG. 1 is a diagram schematically illustrating the inkjet recording apparatus according to one embodiment of the present invention;
FIG. 2 is a diagram schematically illustrating the inkjet recording apparatus according to an another embodiment of the present invention;
FIG. 3 is a diagram schematically illustrating the inkjet recording apparatus according to a further embodiment of the present invention;
FIG. 4 is a graph illustrating one example of the changes with time of the temperature of the surface of recording medium;
FIG. 5 is a diagram schematically illustrating a conventional inkjet recording apparatus;
FIG. 6 is a graph illustrating the changes with time of the temperature of the surface of recording medium in a conventional inkjet recording apparatus; and
FIG. 7 is a diagram schematically illustrating a flat head type inkjet recording apparatus according to a further embodiment of the present invention.

Next, various embodiments of the present invention will be explained.

In the methods according to the embodiments of the present invention, there is employed a photo-curing type ink comprising at least one solvent which is polymerizable in the presence of an acid, a photo-acid generating agent which is capable of generating the acid as the ink is irradiated with light, and a colorant component. The capability of forming the images of this kind ink depends largely on the chemically amplified mechanism of the ink. Namely, at first, when the ink is irradiated with light, an acid generates from the photo-acid generating agent and this acid then diffuses into the ink layer due to the heating of the ink layer, thus enabling the acid to act as a catalyst for the cross-linking reaction of the ink layer. Due to this diffusion of the acid, it is now possible to enable the acid to penetrate even into the deep region of the ink layer to which the light is incapable of being transmitted due to the obstruction by the coloring materials for example, thus making it possible to promote the curing throughout an extensive region of the ink layer.

In the ink to be employed in the method according to the embodiments of the present invention, the solvent thereof which is polymerizable in the presence of an acid should preferably be composed of not less than 50 parts by weight of at least one kind of compound selected from the group consisting of epoxy compounds having alicyclic skeleton and/or aliphatic skeleton, vinyl ether compounds and oxetane compounds each having a viscosity of 50 mPa·s or less at ordinary temperature and ordinary pressure and a boiling point of 150°C or more. When the viscosity of.the solvent is confined to 50 mPa·s or less, the ink is enabled to be ejected from the inkjet head, thus making the ink suitable for use in inkjet recording. Further, when the boiling point of the ink is 150°C or more, it is possible to suppress the volatility of ink, thereby enhancing the stability in relation to the delivery of inkjet ink. The boiling point of the solvent to be employed should more preferably be 180°C or more. As long as the content of the solvent which is polymerizable in the presence of an acid is not less than 50% by weight based on the whole quantity of the solvent, the properties described above can be sufficiently exhibited. A portion of the alicyclic skeleton and/or aliphatic skeleton may be constructed to include oxygen atom.

Especially, the solvent should more preferably comprise an aliphatic epoxy compound represented by the following general formula (1) and an oxetane ring-containing compound.

R1-CH₂-C(CH₃)₂-CH₂-R1 (1)

(in this general formula (1), R1 is glycidyl ether)

As for the photo-acid generating agent, it is possible to employ, for example, onium salts, diazonium salts, quinone diazide compounds, organic halides, aromatic sulfonate compounds, bisulfone compounds, sulfonyl compounds, sulfonate compounds, sulfonium compounds, sulfamide compounds, iodonium compounds, sulfonyl diazomethane compounds and mixtures thereof.

In particular, it is more preferable to employ onium salts. Examples of onium salts useful in this case are diazonium salts, phosphonium salts and sulfonium salts having, as a counter ion, fluoroborate anion, hexafluoroantimonate anion, hexafluoroarsenate anion, trifluoromethane sulfonate anion, paratoluene sulfonate anion or paranitrotoluene sulfonate anion.

The mixing ratio of the photo-acid generating agent in the photo-curing type ink should preferably be confined within the range of 1 to 12 parts by weight per 100 parts by weight of the solvent which is polymerizable in the presence of an acid included in the ink. If the mixing ratio of the photo-acid generating agent exceeds the aforementioned range, the dispersibility of pigment would be badly affected or the stability of the viscosity in relation to the life time of the inkjet ink would be badly affected. Further, if a sensitizing agent is incorporated into the ink for further enhancing the dispersibility of pigment and the stability in viscosity of the ink, the mixing ratio of the photo-acid generating agent in the ink should preferably be confined within the range of 1 to 10 parts by weight per 100 parts by weight of the solvent.

As for the colorant component to be included in the photo-curing type ink, it is possible to employ photoabsorptive pigments. Specific examples of such photoabsorptive pigments include carbonaceous pigment such as carbon black, carbon refined and carbon nanotube; metal oxide pigments such as iron black, cobalt blue, zinc oxide, titanium oxide, chromium oxide and iron oxide; sulfide pigments such as zinc sulfide; phthalocyanine pigments; pigments formed of salts such as metal sulfate, metal carbonate, metal silicate and metal phosphate; and pigments formed of metal powder such as aluminum powder, bronze powder and zinc powder.

The content of the colorant component in the solvent should preferably be confined within the range of 1 to 25 parts by weight, more preferably 3 to 6 parts by weight per 100 parts by weight of the solvent. If the content of the colorant component is less than 1 part by weight, it would become difficult to secure a sufficient color density. On the other hand, if the content of the colorant component is increased over 25 parts by weight, the deliverability of the ink may be degraded. So long as the content of the pigment is at least 3 parts by weight per 100 parts by weight of the solvent, it would be possible to secure a relatively high image density (OD value) of as high as 1.5 or more. These pigments (and dyes) described above may be employed singly or in combination of two or more for the purpose of enhancing the photoabsorbance, chroma and color vision.

The content of powdery components in the ink should preferably be confined within the range of 1 to 50% by weight based on the quantity of the ink. If the content of powdery components in the ink is less than 1% by weight, it would be impossible to sufficiently secure the effects of enhancing the photosensitivity of ink. On the other hand, if the content of powdery components in the ink is higher than 50% by weight, the resolving power and the photosensitivity of ink would be degraded.

As for the average particle diameter of the colorant component or of the powdery component to be employed in the inkjet ink, it should be as small as possible, provided that it would not badly affect the delivery of inkjet ink and the manifestation of desired functions of these components. Generally speaking however, the average particle diameter of the colorant component or of the powdery component should be confined to 1/3 or less, more preferably about 1/10 of the pore diameter of the nozzle to be employed for discharging the inkjet ink to be employed for recording. Incidentally, the pore diameter of the nozzle is typically 10 µm or less, more preferably 5 µm or less. Therefore, a preferable particle diameter of the colorant component or of the powdery component should be limited to 0.3 µm or less, the average particle diameter thereof being typically confined within the range of 0.05 to 0.2 µm.

The photo-curing type ink to be employed in the method according to the embodiments of the present invention can be obtained by a process wherein predetermined components are mixed together uniformly and then subjected to filtration using a PTFE filter for instance.

In order to enable the ink to be stably delivered or discharged from the inkjet head, the ink should preferably have a viscosity falling within a predetermined range. For example, the viscosity of the ink should be controlled to 50 mPa·sec or less at a temperature of 25°C, more preferably 30 mPa·sec or less at a temperature of 25°C.

Next, the inkjet recording apparatus according to one embodiment of the present invention will be explained with reference to drawing.

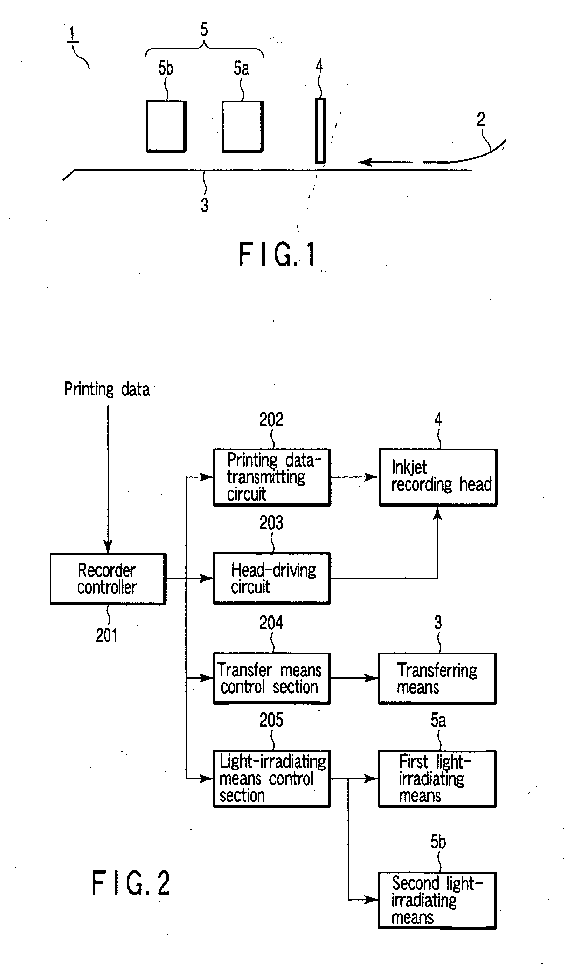

FIG. 1 is a diagram schematically illustrating the inkjet recording apparatus according to one embodiment of the present invention. The inkjet recording apparatus 1 shown herein is provided with a transferring means (conveyor) 3 for transferring a recording medium 2. Along the running direction of the transferring means 3, there are successively disposed, starting from the upstream side to the downstream side, an inkjet type recording head 4, and a light-irradiating means (light source) 5. This light-irradiating means 5 comprises a first light-irradiating means 5a and a second light-irradiating means 5b, which are sequentially arranged.

With respect to the recording medium (or an article to which printing is applied) 2, there is not any particular limitation on the kinds thereof as long as printing can be performed on the recording medium 2. Namely, it is possible to employ, as the recording medium 2, various kinds of materials including paper, wood, an OHP sheet, a resin film, non-woven fabric, a porous film, a plastic plate, a circuit board and a metallic substrate.

The transferring means 3 is constructed so as to enable the recording medium 2 to pass successively through the recording head 4 and the front side of a light-irradiating means 5. In this case, the transferring means 3 transfers the recording medium 2 from the right side to the left side in the drawing. This transferring means 3 can be constituted for example by a belt and/or a roller for transferring the recording medium 2, and a driving mechanism for driving the belt and/or the roller. Further, this transferring means 3 may be further provided with a guiding member for assisting the transfer of the recording medium 2. Furthermore, this transferring means 3 may be formed of a stage structure which runs slidably on a linear base so as to transfer the recording medium 2 of sheet-like configuration.

The recording head 4 is provided so as to deliver a photo-curing type ink onto the recording medium 2 according to image signals, thereby forming an ink layer.

The light-irradiating means 5 irradiates light to the ink layer formed on the recording medium 2, thus enabling acid to generate in the ink layer and further promoting the curing of the ink layer by the effects of the acid. As for the light-irradiating means 5, it is possible to employ a mercury lamp such as a low, medium or high pressure mercury lamp; a meta-halide lamp; an electrodeless meta-halide lamp; a tungsten lamp; a xenon lamp; an arc lamp; an excimer lamp; an excimer laser; a semiconductor laser; a YAG laser; a laser system constituted by a combination of laser and nonlinear optical crystal; a high-frequency induction ultraviolet generating apparatus; an electron beam irradiating apparatus; an X-ray irradiating apparatus; etc. Among them, the employment of the high-frequency induction ultraviolet generating apparatus, the high/low pressure mercury lamp and the semiconductor laser would be more preferable, since these devices are advantageous in simplifying the system involved. When ultraviolet rays are to be employed, the wavelength of the ultraviolet rays should preferably be confined within the range of 100 nm to 600 nm. More preferably, although the wavelength of the light is required to be conformed with the sensitive wavelength of the photo-acid generating agent incorporated in the photo-curing type ink, the light-irradiating means 5 should preferably be such that has a peak illuminance in the vicinity of 250 nm or 365 nm. The light-irradiating means 5 may be provided with a converging mirror or a sweep optical system.

The wavelength of the light to be emitted from the light-irradiating means 5 may not be limited to ultraviolet rays but may be optionally selected from those of sensitive wavelength of the photo-acid generating agent incorporated in the photo-curing type ink.

The light-irradiating means 5 in the inkjet recording apparatus 1 according to one embodiment of the present invention comprises a first light-irradiating means 5a having a first peak illuminance and a second light-irradiating means 5b having a second peak illuminance. In this case, the first peak illuminance should preferably be lower than the second peak illuminance.

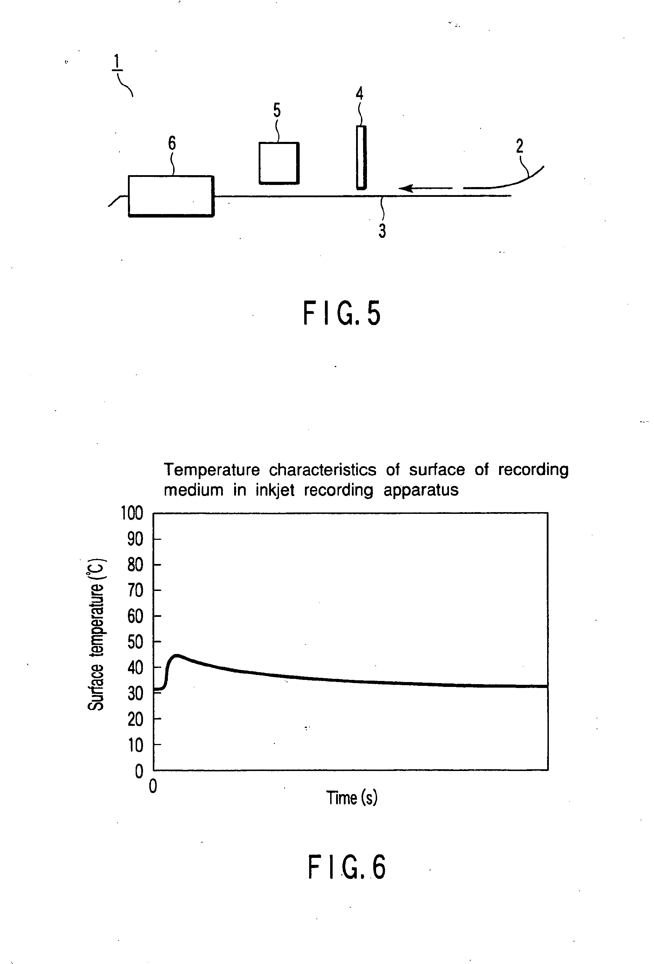

When the irradiation of light is performed by using these two light-irradiating means, the surface temperature of the recording medium 2 is fluctuated, for example, as shown in FIG. 4. FIG. 4 illustrates one example of the changes with time of the surface temperature of the recording medium 2 in the inkjet recording apparatus 1 according to one embodiment of the present invention.

From the first light-irradiating means 5a and the second light-irradiating means 5b, not only the irradiation of light but also the emission of heat is effected. In the same manner as in the case of the irradiation of light, this heat is also applied to the ink layer on the recording medium 2 in such a pattern as having peaks as shown in FIG. 4. When the first peak of the heat and the second peak of the heat are positioned close to each other, the second light irradiation will be effected under the condition where the temperature of the ink layer is not yet cooled down to the initial temperature. As a result, the effects of diffusion of the acid generated would be enhanced, thereby preferably promoting the photo-curing reaction.

By using the aforementioned inkjet recording apparatus 1, the solid printing of images to the recording medium 2 can be performed by the following method.

First of all, by the transferring means 3, the recording medium 2 is transferred from the right side to the left side in the drawing. The transferring speed of the recording medium 2 may be optionally selected depending on the intended use thereof even though the transferring speed is also restricted by the printing density and the driving frequencies. For example, the transferring speed of the recording medium 2 may be controlled so as to fall within the range of around 10 m/min.

As the recording medium 2 is transferred up to a location in front of the recording head 4, the photo-curing type ink is delivered from the recording head 4 according to the image signals. As a result, a prescribed ink layer is formed on the recording medium 2.

Then, the recording medium 2 having the ink layer is subjected to the irradiation of light as explained below. Namely, as described above, the light to be employed in this irradiation is required to be conformed to the sensitive wavelength of the photo-acid generating agent incorporated in the photo-curing type ink. For example, ultraviolet rays having a peak illuminance in the vicinity of 250 nm or 365 nm may be employed.

The recording medium 2 having the ink layer formed thereon is the transferred to a location in front of the first light-irradiating means 5a. When the recording medium 2 passes through a location in front of the first light-irradiating means 5a, light is irradiated at a first peak illuminance from the first light-irradiating means 5a to the ink layer formed on the recording medium 2. Due to this first irradiation of light, an acid generates and diffuse into the ink layer. In this case however, it is required that the curing of the ink layer (especially, the region in the vicinity of the surface of the ink layer) should be performed in such a manner that the curing thereof is not yet completely achieved. In order to realize this, the first peak illuminance of the first light-irradiating means 5a should preferably be confined within the range of about 200 mW/cm² to 2000 mW/cm². If the first peak illuminance of the first light-irradiating means 5a is less than 200 mW/cm², it may become difficult to sufficiently generate an acid and diffuse it into the ink layer. On the other hand, if the first peak illuminance of the first light-irradiating means 5a exceeds 2000 mW/cm², only the ink layer (especially, the region in the vicinity of the surface of the ink layer) may cure.

The recording medium 2 bearing the ink layer having the acid diffused therein by the effects of the first irradiation of light is then transferred to the front of the second light-irradiating means 5b. When the recording medium 2 passes through a location in front of the second light-irradiating means 5b, light is irradiated at a second peak illuminance from the second light-irradiating means 5b to the ink layer formed on the recording medium 2. Due to this second irradiation of light, the curing of the ink layer is promoted. In order to realize this, the second peak illuminance of the second light-irradiating means 5b is preferably confined within the range of about 1000 mW/cm² to 3000 mW/cm². If the second peak illuminance of the second light-irradiating means 5b is less than 1000 mW/cm², it may become difficult to sufficiently promote the curing of the ink layer. On the other hand, if the second peak illuminance of the second light-irradiating means 5b exceeds 3000 mW/cm², the recording medium 2 may be deformed or the components in the ink may be damaged.

The total integrated quantity of the ultraviolet rays irradiated in each of these first and second irradiations should preferably be confined within the range of about 150 mJ/cm² to 400 mJ/cm². If the total integrated quantity of the ultraviolet rays irradiated is less than 150 mJ/cm², the generation as well as the diffusion of the acid in the ink layer may become insufficient, thus making it difficult to sufficiently promote the curing of the ink. On the other hand, if the total integrated quantity of the ultraviolet rays irradiated exceeds 400 mJ/cm², various problems such as the damage to the components in the ink may occur.

As for the heat to be irradiated together with the irradiation of light, the peak temperature of the recording medium 2 to be effected by a first heat should preferably be confined within the range of about 30°C to about 50°C, and the peak temperature of the recording medium 2 to be effected by a second heat should preferably be confined within the range of about 40°C to about 60°C.

Since the volume of the ink layer to be formed on the recording medium 2 is very small as compared with the volume of the recording medium 2, the temperature of the ink layer would become almost the same as that of the surface temperature of the recording medium 2.

The surface temperature of the recording medium 2 immediately after having passed through the second light-irradiating means 5b should preferably be higher than the initial temperature thereof by at least 10°C. This initial temperature herein denotes the surface temperature of the recording medium 2 prior to the first irradiation of light mentioned above. If it is possible, through the second irradiation of light, to increase the surface temperature of the recording medium 2 by 10°C or more, the acid that has been generated in the ink layer by the irradiation of light by the first light-irradiating means 5b can be reliably diffused in the step of the irradiation by the second light-irradiating means 5b concurrent with the generation of the acid to be effected by the second light-irradiating means 5b.

Although it may differ depending on the transferring speed of the recording medium 2, if a relative distance between the first light-irradiating means 5a and the second light-irradiating means 5b is excessively large, it may become impossible to increase the peak temperature of the surface of recording medium 2 up to a desired temperature after the second irradiation of light. The reason for this can be ascribed to the fact that, in contrast to the illuminance to be effected by the irradiation of light (herein, ultraviolet rays for instance), the peak temperature of the surface of recording medium 2 that can be effected by heat to be derived from the second light-irradiating means 5b is required to be accumulated on the peak temperature of the surface of recording medium 2 that can be effected by heat to be derived from the first light-irradiating means 5a.

Therefore, in order to prevent the surface temperature of the recording medium 2 from being lowered again down to the initial temperature after the first irradiation of light before the application of the second irradiation of light, the temporal distance between the first light-irradiating means 5a and the second light-irradiating means 5b should preferably be adjusted as close as possible.

In the case of the photo-curing type ink, an acid generates from the photo-acid generating agent when the ink is irradiated with light and this acid then diffuses into the ink layer due to the heating of the ink layer, thus enabling the acid to act as a catalyst for the cross-linking reaction or decomposition reaction of the ink layer. Due to this diffusion of the acid, it is now possible to enable the acid to penetrate even into the deep region of the ink layer to which the light is incapable of being transmitted due to the obstruction by the coloring materials for example, thus making it possible to promote the curing throughout an extensive region of the ink layer in the presence of the acid though the curing reaction may be somewhat slow.

However, since the curing reaction is essentially slow, there is a problem in this case that when another recording medium is directly superimposed on a printed image immediately after finishing the exposure-curing process, a phenomenon of set-off occurs on the rear surface of the underlying recording medium. Whereas in the method according to one embodiment of the present invention, as described above, an acid generates at first from the photo-acid generating agent included in the ink layer at a sufficient quantity for effecting a certain degree of curing and, at the same time, diffuses throughout the ink layer. Thereafter, by subjecting the ink layer to the irradiation of light at a higher magnitude of illuminance by the second light-irradiating means 5b, the acid further generates from the photo-acid generating agent and, at the same time, due to the heat generated on this occasion, the acid further diffuses throughout the ink layer. As a result, the curing of the ink layer on the recording medium can be effectively promoted, thereby making it possible to solve the aforementioned problem.

The inkjet recording apparatus 1 according to one embodiment of the present invention, which is shown in FIG. 1 can be controlled as explained below. Incidentally, FIG. 2 is a flow chart representing the control system of the inkjet recording apparatus according to one embodiment of the present invention.

The inkjet recording apparatus 1 comprises, as main constituent components, the transferring means 3, the inkjet recording head 4, the first light-irradiating means 5a and the second light-irradiating means 5b, each of which being fundamentally designed to be driven through the control by microprocessor. Accordingly, the inkjet recording apparatus 1 is provided with CPU functioning as microprocessor, and with ROM and RAM (both not shown) both bus-connected with the CPU to constitute a microcomputer. The aforementioned main constituent components are controlled and driven according to the operation program stored in the ROM or the RAM. In obedience to this driving control according to the operation program, the transferring means 3, the inkjet recording head 4, the first light-irradiating means 5a and the second light-irradiating means 5b are operated as follows.

First of all, printing data are transmitted to a recorder controller 201, through which the printing data is transferred to a printing data-transmitting circuit 202. Then, a driving signal for printing is transmitted to a head-driving circuit 203, which is then operated to drive the inkjet recording head 4 in such a manner that a photo-curing type ink is enabled to deliver, as a small ink droplet, from nozzles (not shown) according to the printing data that have been transmitted to the printing data-transmitting circuit 202.

On this occasion, by the recorder controller 201, driving signals are also transmitted to a transfer means control section 204 and to a light-irradiating means control section 205. As a result, a driving roller is actuated to drive the transferring means 3, thus transferring the recording medium 2. On this occasion, the bulbs of the first light-irradiating means 5a and the second light-irradiating means 5b are switched on. Incidentally, these light-irradiating means 5a and 5b are respectively provided with a converging mirror so as to converge the irradiated light at a point in the vicinity of the ink layer.

Due to the combination of the transferring movement of the recording medium 2 in a secondary scanning direction with the selective delivery of the ink from the inkjet recording head 4 whose nozzles (not shown) are arrayed in a line along the main scanning direction, it is possible to form images in conformity with the printing signals on the recording medium 2. The images thus formed (i.e. ink layer) are then transferred to the positions where the first light-irradiating means 5a and the second light-irradiating means 5b are located and are irradiated with light emitted from the bulbs of these light-irradiating means, thereby fixing the images on the recording medium 2.

In this case, according to this embodiment of the present invention, the output of irradiation to be effected respectively by the first light-irradiating means 5a and the second light-irradiating means 5b is controlled by the light-irradiating means control section 205 to optimize the printing process and the exposure/curing conditions in the employment of the inkjet recording apparatus 1.

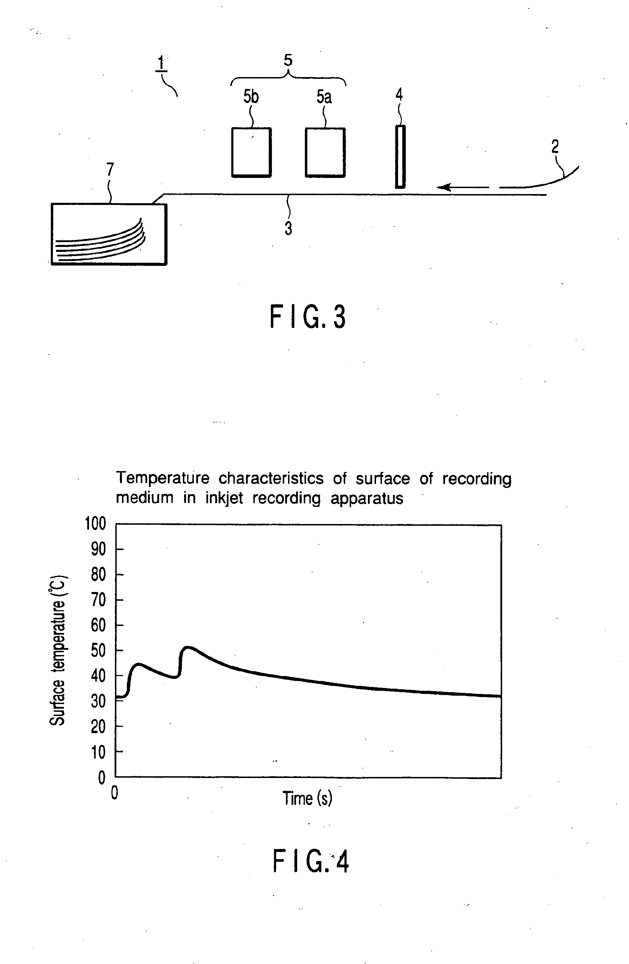

In the case of the inkjet recording apparatus 1 shown in FIG. 1, the inkjet recording operation on each recording medium 2 will be finished as the recording medium 2 has passed through the second light-irradiating means 5b. Under certain circumstances, the recording medium 2 may be transferred to the stocker 7 as shown in FIG. 3. This stocker 7 may be provided with a heating device to further promote the curing of the ink layer. When a plurality of recording mediums 2 are piled up one another in this manner and collectively heated batch-wise, it will be possible to provide an inkjet recording apparatus which is capable of quickly curing the ink layer.

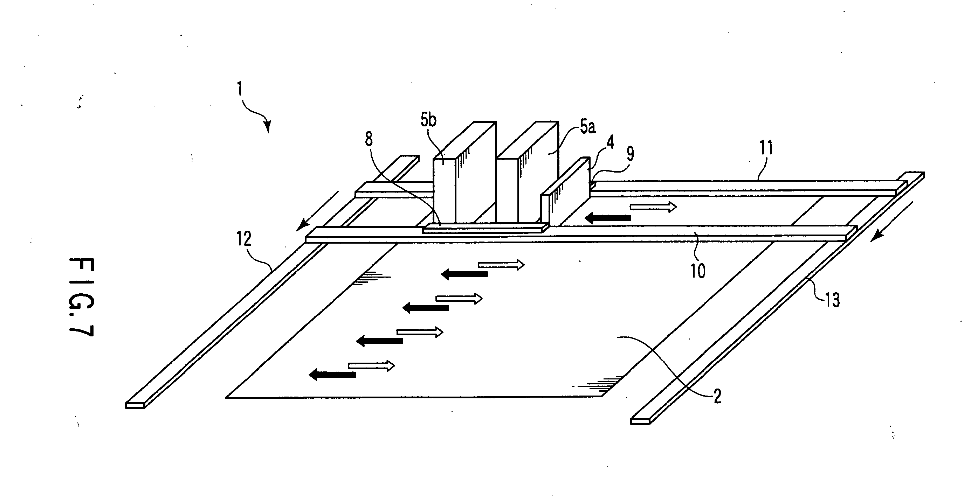

Alternatively, the inkjet recording apparatus 1 according to this embodiment of the present invention may be constituted by a flat bed type inkjet recording apparatus. One embodiment of such an apparatus is schematically illustrated in FIG. 7. In this inkjet recording apparatus shown herein, the recording medium 2 is fixed in place and the inkjet recording head 4 as well as the light-irradiating means 5 are moved relative to the recording medium 2 to form images.

This inkjet recording apparatus 1 is provided, as an inkjet recording unit, with the inkjet recording head 4, the first light-irradiating means 5a, and the second light-irradiating means 5b. In this case, the inkjet recording head 4 is serially and reciprocatively moved over the recording medium 2 which is fixed to a recording medium-fixing stage (not shown) to perform the recording of images.

This inkjet recording unit is fixed as one unit by a couple of guides 8 and 9 positioned on the opposite sides of the inkjet recording unit and is constructed such that it is placed on a couple of front and rear rails 10 and 11 which are disposed parallel with each other and that it is enabled to move reciprocatively in the directions indicated by the white arrow and the black arrow shown in the drawing. As for the method of moving the inkjet recording unit, it is possible to employ a wire which is attached, in a stretched state, to a stepping motor, etc. so as to enable the inkjet recording unit to be pulled by the wire. Alternatively, it is also possible to employ a linear slider so as to enable the inkjet recording unit to move by itself.

The front and rear rails 10 and 11 are fixed in parallel and designed to be moved in the direction of the arrow along a couple of left and right rails 12 and 13 disposed in parallel with each other, both being positioned on the opposite sides of the recording medium 2.

When performing inkjet recording by using the inkjet recording apparatus which is constructed as described above, the inkjet recording unit is transferred in the direction of the white arrow as shown in the drawing, in the course of which images are formed on the recording medium 2. After finishing the formation of the images during this one-way transferring of the inkjet recording unit, the inkjet recording unit is moved in the direction of the arrow along the left and right rails 12 and 13 disposed in parallel with each other, thereby laterally shifting the inkjet recording unit to an unrecorded portion of the recording medium 2 in the course of the backward movement of the inkjet recording unit in the direction indicated by the black arrow. Then, in the same manner as described above, the inkjet recording unit is transferred in the direction of the white arrow, in the course of which images are formed on the recording medium 2. These operations are repeated, thereby making it possible to form images on a large recording medium 2.

Each of the aforementioned components is fundamentally driven through the control by microprocessor. Accordingly, the inkjet recording apparatus 1 is provided with CPU functioning as microprocessor, and with ROM and RAM (both not shown) both bus-connected with the CPU to constitute a microcomputer. These constituent components are respectively controlled according to the operation program stored in the ROM or the RAM. In obedience to this driving control according to the operation program, the inkjet recording head 4, the first light-irradiating means 5a, the second light-irradiating means 5b, and the transfer of the inkjet recording unit are operated as follows.

The operation of the inkjet recording apparatus shown in FIG. 7 will be explained with reference to the flow chart shown in FIG. 2. First of all, printing data are transmitted to a recorder controller 201, through which the printing data is transferred to a printing data-transmitting circuit 202. Then, a driving signal for printing is transmitted to a head-driving circuit 203, which is then operated to drive the inkjet recording head 4 in such a manner that a photo-curing type ink is enabled to deliver, as a small ink droplet, from nozzles (not shown) according to the printing data that have been transmitted to the printing data-transmitting circuit 202.

On this occasion, by the recorder controller 201, driving signals are also transmitted to a transfer means control section 204 and to a light-irradiating means control section 205. In this case, the transfer means control section 204 controls the transferring operation of the inkjet recording unit.

Through the aforementioned controlling operation, a motor or a linear slider is driven to move the transferring means 3 and the inkjet recording unit is driven and transferred in association with the motor or the linear slider. In this case, the transferring means 3 is operated so as to transfer the inkjet recording unit in the main scanning direction thereof as well as in the secondary scanning direction thereof.

The main scanning direction of the inkjet recording unit herein means the direction of the white arrow as well as the direction of the black arrow shown in the drawing. On the other hand, the secondary scanning direction of the inkjet recording unit herein means the direction of the arrow shown in the drawing. On this occasion of scanning, the bulbs of the first light-irradiating means 5a and the second light-irradiating means 5b are switched on. These light-irradiating means 5a and 5b are respectively provided with a converging mirror so as to converge the irradiated light at a point in the vicinity of the ink layer.

The printing by the inkjet recording head 4 is performed synchronous with the transfer of the inkjet recording unit in the direction of the white arrow and of the black arrow as well as with the transfer of the inkjet recording unit in the direction of the arrow or in the secondary scanning direction.

Due to the combination of the transferring movement of the recording medium 2 in a secondary scanning direction with the selective delivery of the ink from the inkjet recording head 4 whose nozzles (not shown) are arrayed in a line along the main scanning direction, it is possible to form images in conformity with the printing signals on the recording medium 2. The images thus formed on the recording medium 2 (i.e. ink layer) are positioned together with the inkjet recording head 4 in the inkjet recording unit and then irradiated by the bulbs of the first light-irradiating means 5a and the second light-irradiating means 5b both to be moved simultaneous with the inkjet recording head 4, thereby fixing the images on the recording medium 2.

According to this embodiment of the present invention, the output of irradiation to be effected respectively by the first light-irradiating means 5a and the second light-irradiating means 5b is controlled by the light-irradiating means control section 205 to optimize the printing process and the exposure/curing conditions in the employment of the inkjet recording apparatus 1.

In the method according to this embodiment of the present invention, after subjecting the ink layer to the first irradiation of light including the wavelength which can be absorbed by the photo-acid generating agent by the first light-irradiating means having a smaller peak illuminance, the resultant ink layer is further subjected to the second irradiation of light by the second light-irradiating means having a larger peak illuminance. Due to the first irradiation of light, an acid generates from the photo-acid generating agent in the ink layer and at the same time, the viscosity of the ink is lowered due to the rise in temperature of the ink, thereby enabling the acid to uniformly diffuse in the ink layer. In this first irradiation of light, the ink layer is kept in an incompletely cured state. Under the condition where the acid exists inside the ink layer, the ink layer is subjected to the second irradiation of light having a larger peak illuminance. As a result, the acid is further generated from the photo-acid generating agent included in the ink layer. At the same time, owing to the increased diffusion of the acid due to the rise in temperature of the ink, not only the surface portion of the ink layer but also the interior of the ink layer are enabled to cure uniformly.

As described above, according to the method representing one embodiment of the present invention, it is possible to obtain a tack-free printed matter which is free from set-off of printing even if a plurality of recording mediums are stacked up immediately after the printing thereof.

Next, the embodiment of the present invention will be explained in detail with reference to specific examples.

A photo-curing type ink was prepared to investigate the curing properties thereof. In the preparation of the ink, aliphatic epoxide Ep1 represented by the following chemical formula and an oxetane ring-containing compound Ox1 represented by the following chemical formula were mixed with each other at a ratio of 1:1 (weight ratio) to obtain an acid-polymerizable composition (epoxy composition) "a". Incidentally, the compound Ep1 is SR-NPG (neopentylglycol diglycidyl ether; Sakamoto Yakuhin Kogyo Co., Ltd.), and the compound Ox1 is DOX (abbreviation) = OXT-221 (di[1-ethyl(3-oxetanyl)]methyl ether; Toagosei Chemical Industry Co., Ltd.).

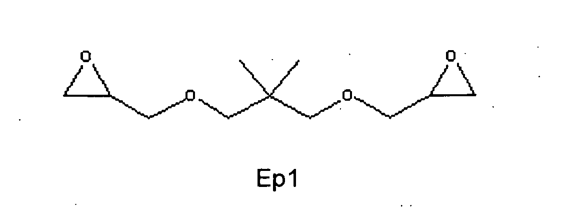

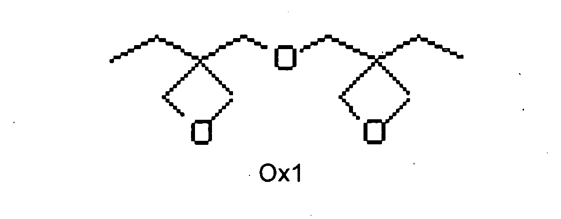

Carbon black pigment was employed as a coloring component and kneaded together in advance with acrylic resin. The kneaded material was then mixed with the epoxy composition at such a ratio that the content of the carbon black pigment would become 4% by weight based on the epoxy composition "a". To the mixture thus obtained, 200 ppm of nonionic surfactant (Sumitomo 3M Co., Ltd.) was added and subjected to a dispersion treatment a whole day and night by a paint shaker to obtain a black color composition "a(B)".

This black color composition "a(B)" was then mixed with a photo-acid generating agent PAG3 to prepare a photosensitive ink 1. The PAG3 employed as a photo-acid generating agent was a.propylene carbonate solution containing a 1:1 mixture of the compounds PAG1 and PAG2 represented by the following chemical formulas at a concentration of 50% by weight. Further, this PAG3 was a propylene carbonate solution containing sulfonium salt at a concentration of 50% by weight and was available in the market, the trademark thereof being ESACURE1064 (Lanbelty Co., Ltd.). This PAG3 was incorporated into the epoxy composition "a" at a ratio of 7.5% by weight.

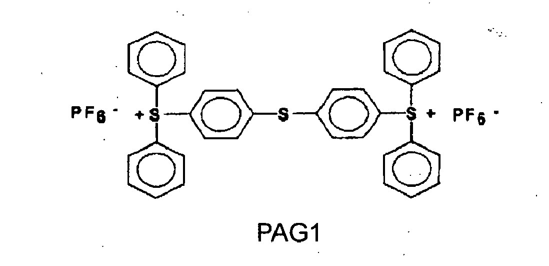

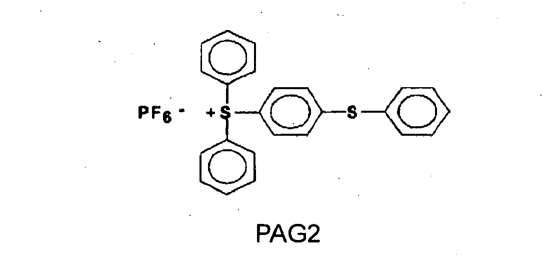

To the photosensitive ink 1, a compound S1 represented by the following chemical'formula was further added as a sensitizing agent and the resultant mixture was filtered by using a 5-µm PTFE filter to obtain a photo-curing type ink 2. This compound S1 employed herein was ANTHRACURE UVS-1331 (Kawasaki Kasei Chemicals Ltd.) and was added to the ink at a ratio of 35% by weight based on the liquid photo-acid generating agent (PAG3).

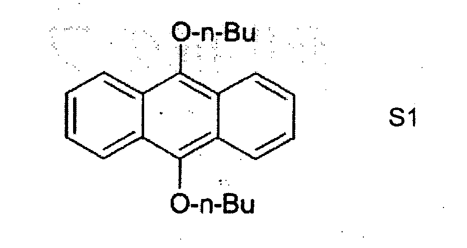

By using the inkjet recording apparatus 1 shown in FIG. 1, the printing was performed by using the photo-curing type ink 2 to investigate the curing properties thereof. The components of the inkjet recording apparatus 1 were respectively prepared as follows. As for the transferring means 3, a metallic endless belt excellent in heat resistance and low in heat capacity was employed and disposed in a tensioned manner between a driving roller and a follower roller. As for the recording medium 2, an OHP sheet (V516 (trademark) (100 µm thick PET sheet); Fuji Zerox Co., Ltd.) was employed.

As for the recording head 4, an inkjet recording head CB1 (trademark; Toshiba TEC Co., Ltd.) was employed. As for the light-irradiating means 5, a couple of UV irradiation system LH-6 (D bulb: peak wavelength=350 nm-390 nm, standard mirror; Fusion UV Systems Japan Co., Ltd.) were employed. The irradiation of light was performed by fluctuating the illuminance and the integrated quantity of light of each of the first light-irradiating means 5a and the second light-irradiating means 5b. Herein, the distance between the first light-irradiating means 5a and the second light-irradiating means 5b was set to about 500 mm, the distance being made variable.

The photo-curing type ink 2 was discharged on the recording medium 2 from the recording head 4 to form an ink layer, which was then cured to create a cured ink film having a thickness of 5 to 6 µm.

The conditions of printing (conditions for forming the cured ink film) were as follows.
Resolving power of recording head 4: 300 dpi;
Volume of delivered ink: 42 pL/each nozzle;
Printing speed (moving velocity of the belt employed as a recording medium transferring means): 25 m/min.;
Illuminance of irradiation (ultraviolet rays): 150 mW/cm²-3000 mW/cm²;
Integrated quantity of light (ultraviolet rays): 100 mJ/cm²-500 mJ/cm².

The irradiation output (illuminance of ultraviolet rays/integrated quantity of light) of the light-irradiating means 5 was a value which was measured by using an ultraviolet ray dosimeter (an industrial UV checker of Topcon Corporation; UVR-T1, light-detecting portion: UD-T36; peak sensitive wavelength: about 350 nm). Further, the output of the irradiation of light was adjusted within the range of 25-100% by using an output adjusting thumbscrew of the aforementioned UV irradiation system. Through the control of each of the first light-irradiating means 5a and the second light-irradiating means 5b, the peak illuminances were variously combined in the irradiation of light, thus forming various kinds of cured ink films.

The temperature of the recording medium 2 being transferred was indirectly measured by a thermocouple which was adhered onto the surface of the recording medium, thereby obtaining the temperature of the recording medium after the first irradiation of light and after the second irradiation of light.

The cured ink films produced were respectively subjected to rubbing several times by using a paper wiper (Chymwipe; Cresia Co., Ltd.) to investigate the tack-free property of the film. Tack-free property herein means the probabilities of the transcription of a photo-curing type ink onto the rear surface of the recording medium 2 that has been superimposed on another recording medium 2 when a plurality of recording mediums 2 each bearing printed images thereon are piled one another. Thus, tack-free means the case wherein even if a plurality of recording mediums 2 each bearing printed images thereon were piled one another, the transcription of a photo-curing type ink formed on the top surface of one of the recording mediums 2 onto the rear surface of overlying recording medium 2 was not recognized at all.
○ Tack-free (even if the cured ink film was rubbed five times with the employment of Chymwipe, the ink was not scraped off)
Δ: Somewhat tack-free (when the cured ink film was rubbed five times with the employment of Chymwipe, the adhesion of the ink to the Chymwipe was admitted)
×: Not tack-free (when the cured ink film was rubbed once with the employment of Chymwipe, the adhesion of the ink to the Chymwipe was admitted; i.e. not sufficiently cured)

If the ink layer is tack-free, it can be determined that the ink layer on the recording medium 2 has been substantially completely cured.

The results measured on the tack-free property of the cured ink films, which were obtained through the fluctuation of the peak illuminances (mW/cm²) of the first and second light-irradiating means, are summarized in the following Table 1 together with the integrated quantities of light irradiation.

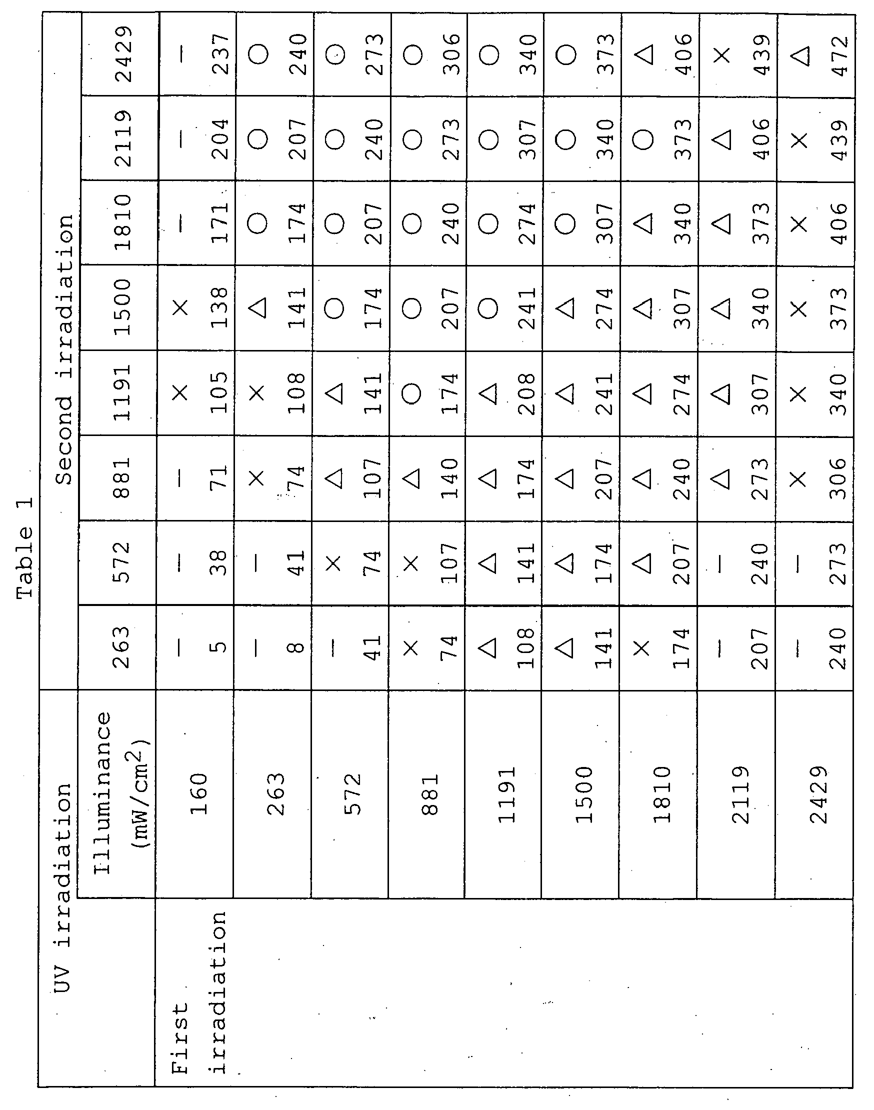

Under these exposure curing conditions, i.e. the conditions of light irradiation, when the output (i.e. illuminance) of the second irradiation of light is increased higher than the first irradiation of light, the tack-free property of the cured ink films can be improved. In other words, these ink films can be made tack-free immediately after the printing thereof. Therefore, in the embodiments of the present invention, it was regulated such that the peak illuminance of the second light-irradiating means is higher than the first light-irradiating means.

As seen from the results of Table 1, the illuminance of irradiation of the first light-irradiating means 5a should preferably be confined within the range of about 200 mW/cm²-2000 mW/cm², and the illuminance of irradiation of the second light-irradiating means 5b should preferably be confined within the range of about 100 mW/cm²-3000 mW/cm². Further, the integrated quantity of light irradiation of the first light-irradiating means 5a and the second light-irradiating means 5b should preferably be confined within the range of about 150 mJ/cm²-400 mJ/cm².

Incidentally, if the illuminance of the first light-irradiating means 5a is made higher to initially give a high irradiation of light to the surface of the ink layer, the surface portion of the ink layer would be sufficiently cured in advance. Therefore, even if light is subsequently irradiated again onto the surface of the ink layer, it would be impossible for the light to reach a deep portion of the ink layer, thereby making it impossible to sufficiently generate an acid. Moreover, even if a sufficient quantity of acid is existed in the ink layer, it would be impossible for the acid to sufficiently diffuse throughout the ink layer due to the curing of the surface portion of the ink layer, thus leading to insufficient curing of the deep portion of the ink layer. Therefore, it is necessary to make the peak illuminance of the first light-irradiating means 5a lower than the peak illuminance of the second light-irradiating means 5b.

The following Table 2 illustrates the peak values of the surface temperature of the recording medium 2 at the moment of light irradiation. In this case, the irradiation of light by the first light-irradiating means 5a and the second light-irradiating means 5b was performed by variously fluctuating the combination of illuminances thereof in the same manner as in the case of Table 1 and the temperature of the recording medium 2 was indirectly measured by a thermocouple which was adhered onto the surface of the recording medium 2, the results measured are summarized in the following Table 2.

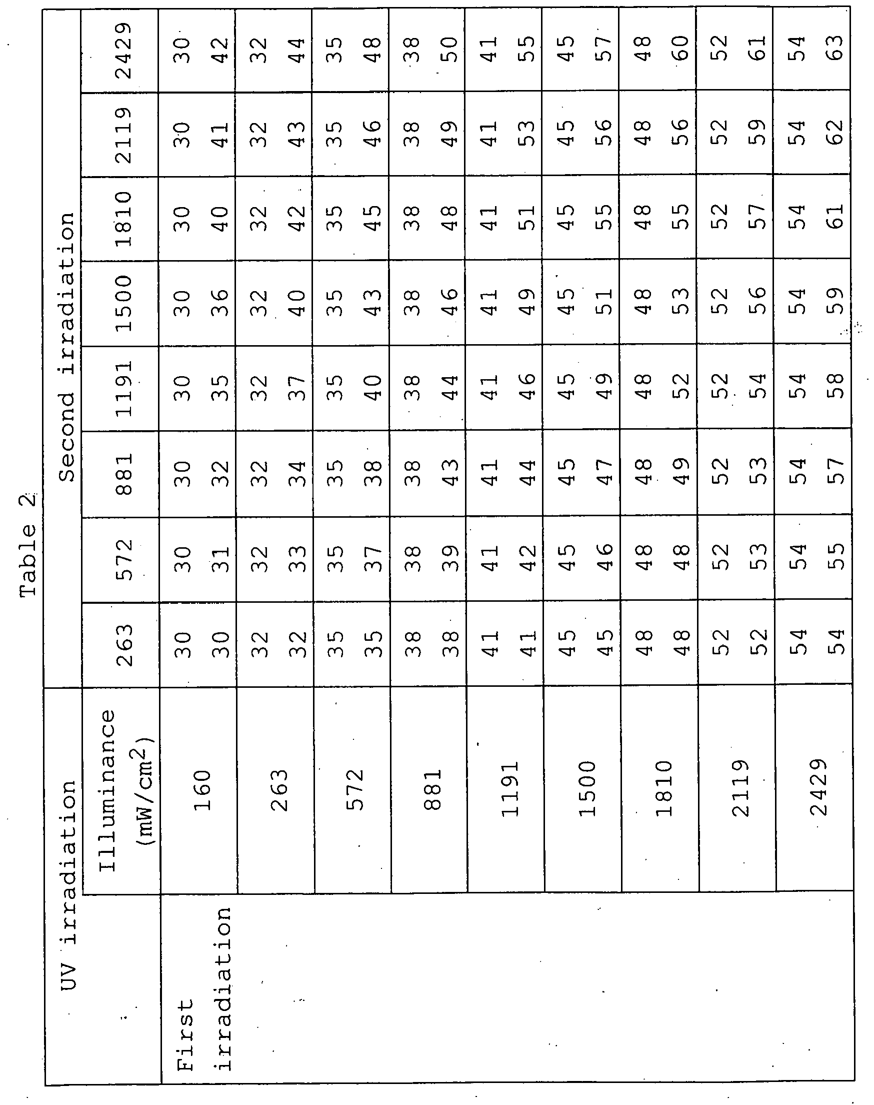

In above Table 2, the values on the upper row represent the peak values of the surface temperature of the recording medium 2 at the moment when the recording medium 2 was passed through the first light-irradiating means 5a, and the values on the lower row represent the peak values of the surface temperature of the recording medium 2 at the moment when the recording medium 2 was passed through the second light-irradiating means 5b. Incidentally, the initial temperature of the recording medium 2 prior to the passing thereof through the first light-irradiating means 5a was 30°C.

It is clear from the comparison of Table 2 with the above-described Table 1 that if the irradiation of light was performed under the conditions that the ink layer became tack-free immediately after the printing, the surface temperature of the recording medium after the second irradiation of light was fundamentally increased by 10°C or more as compared with the initial temperature thereof.

Not only the light but also heat is concurrently emitted from the light-irradiating means 5. Namely, by performing the irradiation of light by the second light-irradiating means 5b at the moment when the surface temperature of the recording medium 2 is at least higher than the initial temperature (in this example, 30°C for instance) of the recording medium 2 prior to the passing thereof through the first light-irradiating means 5a, it is possible to give such temperature characteristics of the surface of recording medium as shown in FIG. 4 to the recording medium 2. As a result, it is possible to effectively perform the generation of an acid from the photo-acid generating agent included in the ink layer as well as the diffusion of the acid in the ink layer, thus making it possible to promote the curing of the ink.

As for the heat to be emitted from the light-irradiating means, the first peak thereof should preferably be as close as possible to the second peak thereof. By doing so, it is possible to perform the second irradiation of light under the condition where the temperature of the ink layer is not yet substantially lowered. As a result, the diffusion of the acid generated can be effectively promoted, thus promoting the photo-curing reaction of the ink layer.

Next, one example of changes with time of the surface temperature of the recording medium 2 in the operation of the inkjet recording apparatus 1 according to one embodiment of the present invention will be explained with reference to FIG. 4. The transferring speed of the transferring means 3 was set to 25 m/min., and the first light-irradiating means 5a was positioned at a location which was spaced away by a distance of 300 mm from the starting position (time: zero). Further, the second light-irradiating means 5b was positioned at a location which was spaced away by a distance of 500 mm from the first light-irradiating means 5a. The peak illuminance of the first light-irradiating means 5a was set to about 1500 mW/cm² and the peak illuminance of the second light-irradiating means 5b was set to about 1810 mW/cm². The integrated quantity of light irradiation was about 307 mJ/cm². The surface temperature of the recording medium 2 on the occasion of the passing thereof through the first light-irradiating means 5a and the second light-irradiating means 5b was fluctuated as shown in FIG. 4.

The surface temperature characteristics of the recording medium in the operation of the conventional inkjet recording apparatus are shown in FIG. 6. More specifically, the surface temperature characteristics shown in FIG. 6 were derived from the operation of the conventional inkjet recording apparatus shown in FIG. 5. The temperature of the recording medium 2 was indirectly measured by a thermocouple which was adhered onto the surface of the recording medium 2. The inkjet recording apparatus shown in FIG. 5 was constructed in the same manner as that of the recording apparatus shown in FIG. 1 except that the provision of the second light-irradiating means 5b was omitted.

It will be recognized from the comparison between FIG. 4 and FIG. 6 that when a couple of light-irradiating means are provided in the recording apparatus, it is possible to increase the energy of light irradiation (integrated quantity of irradiation) to be given to the photo-curing type ink, resulting also in an increase in stepwise of the thermal energy.

Further, the hardness of the printed images formed on the recording medium 2 was also measured. The measurement of the hardness of the printed images was performed according to the JIS K5600-5-4 (MITSU-BISHI pencils 2B-2H were employed). Additionally, the hardness of the printed images after the standing of the printed images under constant conditions was also measured. As for the conditions of the standing of the printed images, they included, under sufficient conditions, 24-hour standing at ordinary temperature, 30-minute standing at a temperature of 50°C, and one-minute standing at a temperature of 100°C. However, the conditions of standing for realizing optimal curing would not be limited to these conditions. Namely, optimal standing conditions may be varied more or less depending on the materials of the composition of the photo-curing type ink, on the kinds of light-irradiating means and on exposure/curing conditions (i.e. light-irradiating conditions).

The pencil hardness of each of the printed matters produced under these conditions is summarized in the following Table 3. In Table 3, the values in the upper row of each column represents the pencil hardness of the ink layer which was made tack-free immediately after the printing, and the values in the lower row of each column represents the pencil hardness of the ink layer which was left standing under constant conditions. If the pencil hardness of the ink layer is higher than "F", the ink layer can be assumed as having a sufficient hardness as a printed matter.

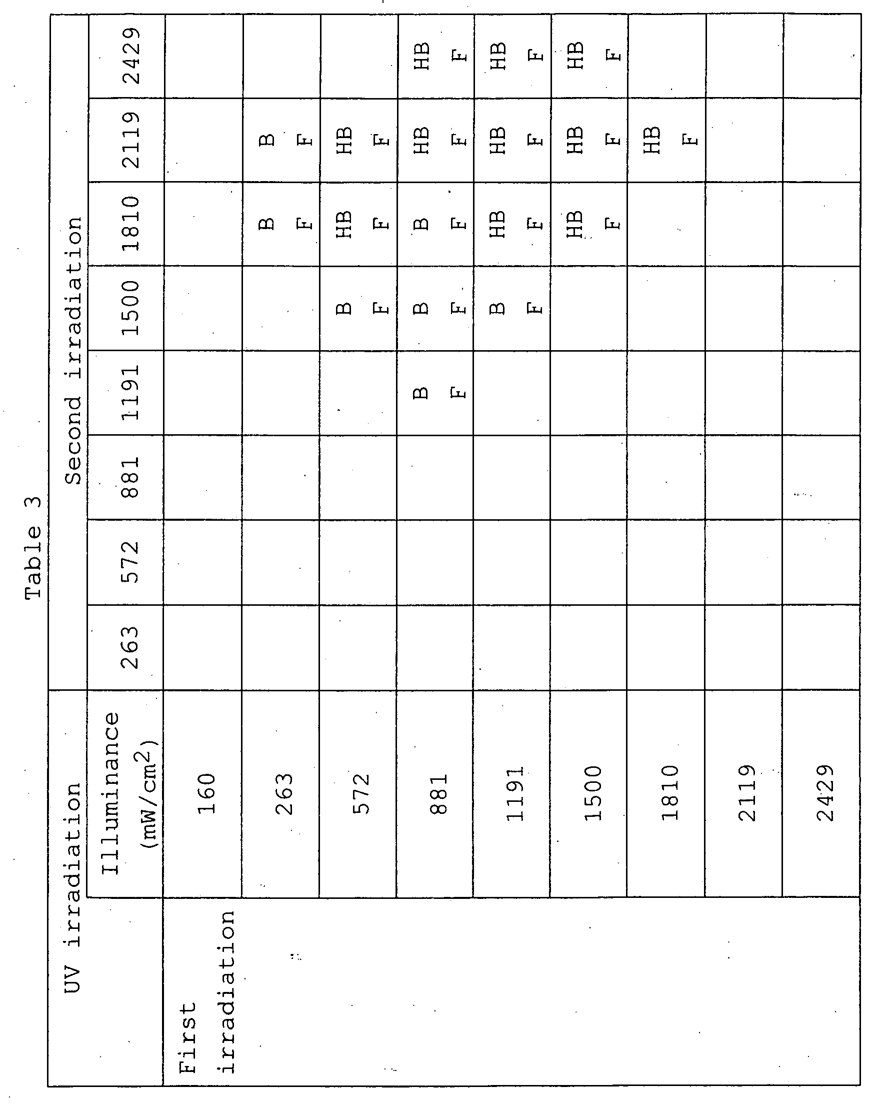

Even if the ink layer was tack-free immediately after the printing as represented by the mark "O" in the above Table 1, the pencil hardness thereof was only in the order of "B" or "HB". This degree of hardness is not yet satisfactory for use as a printed matter. By permitting these printed matters to stand under predetermined conditions, the curing of the photo-curing type ink can be further advanced to obtain an ink layer having a final pencil hardness of "F".

As described above, the printed matter which has been made tack-free can be prevented from generating the set-off even if a plurality of the printed matters are piled up and also would be enabled to attain a final pencil hardness of "F" by permitting it for at least 24 hours in an environment of 25°C for instance. Further, by using the inkjet recording apparatus shown in FIG. 3, the recording medium after finishing the printing can be accommodated in the stocker 7. When the printed matters are subjected to batch-heating treatment in the stocker 7, it would become possible to manufacture the printed matters having a final pencil hardness of "F" within a shorter period of time.

It would be possible, through the employment of the method according to the embodiment of the present invention, to effectively generate an acid and diffuse it into an ink layer having a thickness of 12 µm or less, more preferably 7 µm or less. As a result, it is possible to obtain a printed matter having images exhibiting a relatively high density of 1.5 in image density (OD value).

As explained above, according to the present invention, it is possible to provide an exposure-curing method of a photo-curing type ink, which is capable of uniformly curing not only a surface region but also an inner region of an ink layer without inviting defective curing of the ink layer. Further, according to the present invention, it is also possible to provide an inkjet recording apparatus which is capable of forming excellent printed images without necessitating the additional provision of heating means for promoting the curing of an ink layer composed of a photo-curing type ink.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method of exposure-curing a ink layer formed on a recording medium, the ink layer being formed of a photo-curing type ink comprising at least one solvent which is polymerizable in the presence of an acid, a photo-acid generating agent which is capable of generating the acid as irradiated with light, and a colorant component, said method **characterized by** comprising:
a first light-irradiating step wherein the ink layer is irradiated, by using a light-irradiating means having a first peak illuminance, with light having a wavelength which can be absorbed by the photo-acid generating agent, thereby not only causing the acid to generate from the photo-acid generating agent included in the ink layer but also causing the ink layer to rise in temperature to decrease in viscosity of the ink, thus promoting the diffusion of the acid in the ink layer, with the proviso that the ink layer is cured incompletely by the first light-irradiating step; and
a second light-irradiating step wherein the ink layer which has been treated in the first light-irradiating step is irradiated with light by using a light-irradiating means having a second peak illuminance which is higher than the first peak illuminance, thereby not only causing the acid to further generate from the photo-acid generating agent in the ink layer but also causing the ink layer to rise in temperature to promote the diffusion of the acid inside the ink layer and further promote the curing of the ink layer.

2. The exposure-curing method according to claim 1, **characterized in that** the second light-irradiating step is performed during a time when a surface temperature of the recording medium'is higher than an initial temperature thereof prior to the first light-irradiating step.

3. The exposure-curing method according to claim 1, **characterized in that** the colorant component included in the photo-curing type ink is a pigment, the content of the pigment is confined within the range of 3 to 6 parts by weight per 100 parts by weight of the solvent to be cured in the presence of the acid.

4. The exposure-curing method according to claim 1, **characterized in that** the solvent which is polymerizable in the presence of an acid in the photo-curing type ink comprises not less than 50 parts by weight of an acid-polymerizable compound having alicyclic skeleton and/or aliphatic skeleton and having a viscosity of 50 mPa·s or less at ordinary temperature and ordinary pressure and a boiling point of 150°C or more; and the content of the photo-acid generating agent is confined within the range of 1 to 12 parts by weight per 100 parts by weight of the solvent to be cured in the presence of the acid.

5. The exposure-curing method according to claim 1, **characterized in that** the solvent which is polymerizable in the presence of an acid in the photo-curing type ink comprises at least one selected from the group consisting of epoxy compounds having alicyclic skeleton and/or aliphatic skeleton, vinyl ether compounds and oxetane compounds.

6. The exposure-curing method according to claim 1, **characterized in that** the solvent which is polymerizable in the presence of an acid in the photo-curing type ink comprises an aliphatic epoxy compound represented by the following general formula (1) and an oxetane ring-containing compound:
R1-CH₂-C(CH₃)₂-CH₂-R1 (1)
(in this general formula (1), R1 is glycidyl ether).

7. An inkjet recording apparatus **characterized by** comprising:
an inkjet recording head (4);
means (3) for shifting a recording medium and the inkjet recording head relative to each other;
means for forming an ink layer through delivery of a photo-curing type ink from the inkjet recording head onto the recording medium, the photo-curing type ink comprising at least one solvent which is polymerizable in the presence of an acid, a photo-acid generating agent which is capable of generating the acid as irradiated with light, and a colorant component;
a first light-irradiating means (5a) for irradiating light having a wavelength which can be absorbed by the photo-acid generating agent onto the ink layer at a first illuminance, thereby not only causing the acid to generate from the photo-acid generating agent included in the ink layer but also causing the ink layer to rise in temperature to decrease in viscosity of the ink, thus promoting the diffusion of the acid in the ink layer without curing the ink layer to completely;
a second light-irradiating means (5b) for irradiating light at a second peak illuminance which is higher than the first peak illuminance for promoting the curing of the ink layer after a first irradiation by using the first light-irradiating means; and
a light irradiation-controlling means (205) for controlling the first peak illuminance of the first light-irradiating means so as to make it lower than the second peak illuminance of the second light-irradiating means.

## Amended claims

### Amended claims in accordance with Rule 86(2) EPC.

**1.** A method of exposure-curing an 4 ink layer formed on a recording medium, the ink layer being formed of a photo-curing type ink comprising at least one solvent which is polymerizable in the presence of an acid, a photo-acid generating agent which is capable of generating the acid as irradiated with light, and a colorant component, said method **characterized by** comprising:
a first light-irradiating step wherein the ink layer is irradiated, by using a light-irradiating means having a first peak illuminance, with light having a wavelength which can be absorbed by the photo-acid generating agent, thereby not only causing the acid to generate from the photo-acid generating agent included in the ink layer but also causing the ink layer to rise in temperature to decrease in viscosity of the ink, thus promoting the diffusion of the acid in the ink layer, with the proviso that the ink layer is cured incompletely by the first light-irradiating step; and
a second light-irradiating step wherein the ink layer which has been treated in the first light-irradiating step is irradiated with light by using a light-irradiating means having a second peak illuminance which is higher than the first peak illuminance, during a time when a surface temperature of the recording medium is higher than an initial temperature thereof prior to the first light-irradiating step thereby not only causing the acid to further generate from the photo-acid generating agent in the ink layer but also causing the ink layer to rise in temperature to promote the diffusion of the acid inside the ink layer and further promote the curing of the ink layer.

**2.** The exposure-curing method according to claim 1, **characterized in that** the colorant component included in the photo-curing type ink is a pigment, wherein the content of the pigment is confined within the range of 3 to 6 parts by weight per 100 parts by weight of the solvent to be cured in the presence of the acid.

**3.** The exposure-curing method according to claim 1 or 2, **characterized in that** the solvent which is polymerizable in the presence of an acid in the photo-curing type ink comprises not less than 50 parts by weight of an acid-polymerizable compound having an alicyclic skeleton and/or an aliphatic skeleton and having a viscosity of 50 mPa·s or less at ordinary temperature and ordinary pressure and a boiling point of 150°C or more; and the content of the photo-acid generating agent is confined within the range of 1 to 12 parts by weight per 100 parts by weight of the solvent to be cured in the presence of the acid.

**4.** The exposure-curing method according to any one of claims 1 to 3, **characterized in that** the solvent which is polymerizable in the presence of an acid in the photo-curing type ink comprises at least one selected from the group consisting of epoxy compounds having alicyclic skeleton and/or aliphatic skeleton, vinyl ether compounds and oxetane compounds.

**5.** The exposure-curing method according to any one of claims 1 to 3, **characterized in that** the solvent which is polymerizable in the presence of an acid in the photo-curing type ink comprises an aliphatic epoxy compound represented by the following general formula (1) and an oxetane ring-containing compound:
R1-CH₂-C(CH₃)₂-CH₂-R1 (1)
(in this general formula (1), R1 is glycidyl ether).

**6.** An inkjet recording apparatus **characterized by** comprising:
an inkjet recording head (4);
means (3) for shifting a recording medium and the inkjet recording head relative to each other;
means for forming an ink layer through delivery of a photo-curing type ink from the inkjet recording head onto the recording medium, the photo-curing type ink comprising at least one solvent which is polymerizable in the presence of an acid, a photo-acid generating agent which is capable of generating the acid as irradiated with light, and a colorant component;
first light-irradiating means (5a) for irradiating light having a wavelength which can be absorbed by the photo-acid generating agent onto the ink layer at a first illuminance, thereby not only causing the acid to generate from the photo-acid generating agent included in the ink layer but also causing the ink layer to rise in temperature to decrease in viscosity of the ink, thus promoting the diffusion of the acid in the ink layer without curing the ink layer to completely;
second light-irradiating means (5b) for irradiating light at a second peak illuminance which is higher than the first peak illuminance for promoting the curing of the ink layer after a first irradiation by using the first light-irradiating means; and
light irradiation-controlling means (205) for controlling the first peak illuminance of the first light-irradiating means so as to make it lower than the second peak illuminance of the second light-irradiating means,
wherein the inkjet recording apparatus is adapted such that a second irradiation by the second light-irradiating means is performed during a time when a surface temperature of the recording medium is higher than an initial temperature thereof prior to a first irradiation by the first light-irradiating means.
